(19) Europäisches Patentamt
European Patent Office
Office européen des brevets

(11) EP 0 950 575 A2

(12) EUROPÄISCHE PATENTANMELDUNG

(43) Veröffentlichungstag:
20.10.1999 Patentblatt 1999/42

(51) Int. Cl.⁶: B60R 16/02

(21) Anmeldenummer: 99107582.1

(22) Anmeldetag: 15.04.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 17.04.1998 DE 19817057

(71) Anmelder:
WEBASTO KAROSSERIESYSTEME GmbH
D-82131 Stockdorf (DE)

(72) Erfinder:
• Ganz, Thomas
82131 Stockdorf (DE)
• Appel, Josef
82131 Gauting (DE)

(74) Vertreter: Wiese, Gerhard
Möbus/Schwan/Wiese
Georgenstrasse 6
82152 Planegg (DE)

(54) **Anordnung zur Stromversorgung eines Kraftfahrzeug-Bordnetzes**

(57) Die Erfindung betrifft eine Anordnung zur Stromversorgung des Bordnetzes (3) eines Kraftfahrzeugs mittels einer Lichtmaschine (1) und eines Solargenerators (2). Um Kraftstoff zur Stromerzeugung über die Lichtmaschine (1) effektiv einzusparen, ist erfindungsgemäß eine Einrichtung (5) zur Erfassung der Energiebilanz des Solargenerators (2) relativ zur Lichtmaschine (1) vorgesehen, die eine Einrichtung (10) zum Reduzieren der Lichtmaschinenleistung entsprechend der Solarstromzufuhr bei positiver Energiebilanz zugunsten der Lichtmaschine (1) und eine Einrichtung (11) zum Trennen der Lichtmaschine (1) vom Fahrzeug-Motor (13) bei positiver Energiebilanz zugunsten des Solargenerators (2) steuert.

EP 0 950 575 A2

**Beschreibung**

Die Erfindung betrifft eine Anordnung zur Stromversorgung des Bordnetzes eines Kraftfahrzeugs mittels einer Lichtmaschine und eines Solargenerators.

Herkömmlicherweise werden die an das Bordnetz eines Kraftfahrzeugs angeschlossenen Verbraucher bzw. Aggregate über eine Lichtmaschine und einer dieser nachgeschalteten Batterie mittels des Motors des Kraftfahrzeugs mit Strom versorgt. Bekannt sind ferner zahlreiche Vorschläge, diese Art der Stromversorgung zumindest teilweise zu ergänzen durch Strom, der von einem Solargenerator bereitgestellt wird, der beispielsweise in Gestalt von Solarzellen realisiert ist, die bevorzugt auf dem Dach des Kraftfahrzeugs angeordnet sind. Eine dementsprechende, dem Oberbegriff des Anspruchs 1 entsprechende Anordnung zur Stromversorgung des Bordnetzes eines Kraftfahrzeugs ist beispielsweise aus der DE 36 04 226 C2 bekannt. Ein Energieflußsensor erfaßt dabei den Energiefluß zu bzw. von der Fahrzeugbatterie und führt diesen einer Steuereinrichtung zu, die den Energiefluß über einen vorgegebenen Zeitraum, beispielsweise einen Tag, aufsummiert. Je nachdem, ob die dort erfaßte Summe positiv oder negativ ist, schließt bzw. öffnet die Steuereinrichtung einen Schalter zwischen der Fahrzeugbatterie und dem Bordnetz, um eine übermäßige Entladung der Fahrzeugbatterie zu verhindern.

Ein weiterer Vorschlag zur Nutzung eines Solargenerators zur Stromversorgung des Bordnetzes ist aus der DE 39 24 755 A1 bekannt. Bei dieser bekannten Anordnung ist der Solargenerator über ein Laderegelungsmodul mit der Fahrzeugbatterie verbunden. Das Laderegelungsmodul steuert den Ladestrom in Abhängigkeit von der Batterietemperatur. Die Fahrzeugbatterie ist über ein Schaltmodul mit verschiedenen Aggregaten bzw. Verbrauchern, nämlich einem Schiebedachmotor und zwei Lüftermotoren verbunden. Das Schaltmodul wird von einem Steuermodul, welches die Temperatur im Fahrzeuginnenraum und die Feuchtigkeit oberhalb des Schiebedachs erfaßt, gesteuert, um den Verbraucher in Abhängigkeit von diesen Parametern von der Fahrzeugbatterie zu trennen bzw. sie mit dieser zu verbinden. Die Fahrzeugbatterie wirkt hierbei als Puffer zwischen dem Solargenerator und den Verbrauchern.

Die vorstehend angesprochenen Vorschläge zur teilweisen Energieversorgung des Bordnetzes mittels eines Solargenerators berücksichtigen sämtlich nicht die Tatsache, daß die Energieumwandlung aus fossilen Energieträgern, wie Benzin und Diesel in elektrischen Strom über die Lichtmaschine bei Kraftfahrzeugen mit einem sehr schlechten Gesamtwirkungsgrad verbunden ist. Unter Berücksichtigung verschiedener Betriebsbedingungen des Kraftfahrzeugs ist mit einem Kraftstoffverbrauch von 0,5 Liter pro 100 km je erzeugte 100 Wh elektrische Energie zu rechnen. Dies ist insbesondere kritisch im Zusammenhang mit Kraftfahrzeugen, die im übrigen hinsichtlich ihres Kraftstoffverbrauchs optimiert sind, wie beispielsweise das von der einschlägigen Industrie angestrebte Drei-Liter-Auto.

Angesichts dieses Standes der Technik liegt der Erfindung die Aufgabe zugrunde, eine Anordnung zur Stromversorgung des Bordnetzes eines Kraftfahrzeugs zu schaffen, die den Beitrag zur Stromversorgung durch den Solargenerator optimal nutzt und den Kraftstoffverbrauch für die Stromversorgung über die Lichtmaschine minimiert.

Gelöst wird diese Aufgabe durch die kennzeichnenden Merkmale des Anspruchs 1. Vorteilhafte Weiterbildungen der Erfindung sind in den Unteransprüchen angegeben.

Während bei den bisherigen in Rede stehenden Anordnungen der Solargenerator in erster Linie zur Aufladung der Kraftfahrzeugbatterie und gegebenenfalls zum alleinigen Betrieb ausgesuchter Aggregate bzw. Verbraucher des Kraftfahrzeugs eingesetzt wurde, geht die Erfindung einen vollständig anderen Weg, nämlich denjenigen, den Beitrag der Lichtmaschine zur Stromversorgung des Bordnetzes abhängig von der Leistungs- bzw. Energiebilanz zwischen der Lichtmaschine und dem Solargenerator teilweise bzw. vollständig zu ersetzen, was den Vorteil erbringt, daß weniger Kraftstoff zur Stromerzeugung verbraucht wird als bislang. Typischerweise kann durch den erfindungsgemäßen Einsatz des Solargenerators zur Stromversorgung des Bordnetzes während der Fahrt ein Leistungsbedarf von 100 W, der typischerweise durch die Lichtmaschine geliefert wird, ausgeglichen werden, wenn der Solargenerator dazu ausgelegt ist, maximal 150 W zu erzeugen. Damit entspricht die Kraftstoffeinsparung dem eingangs genannten Kraftstoffverbrauch der Lichtmaschine zur Stromerzeugung von etwa 0,5 Liter pro 100 km.

Je nach Leistungs- bzw. Energiebilanz zwischen der Lichtmaschinenleistung und der Solarstromzufuhr steuert erfindungsgemäß eine Energiebilanz-Erfassungseinrichtung eine Einrichtung zum Reduzieren der Lichtmaschinenleistung entsprechend der Solarstromzufuhr bei positiver Leistungs- oder Energiebilanz zugunsten der Lichtmaschine und zum andern eine Einrichtung zum Trennen der Lichtmaschine vom Fahrzeug-Motor bei positiver Leistungs- oder Energiebilanz zugunsten des Solarstromgenerators.

Diese Einrichtungen zum Reduzieren der Lichtmaschinenleistung bzw. Abschalten derselben können grundsätzlich in unterschiedlicher Weise realisiert sein. Vorteilhafterweise steuert die Einrichtung zum Reduzieren der Lichtmaschinenleistung die Bestromung der Erregerwicklung der Lichtmaschine. Die Einrichtung zum Trennen der Lichtmaschine vom Fahrzeug-Motor umfaßt vorteilhafterweise eine Kupplung, die eine mechanische Trennung der Lichtmaschine vom Fahrzeug-Motor erlaubt. Bevorzugt ist eine integrierte Magnetkupplung, die das Magnetfeld der Erregerwicklung zur Steuerung der Kupplung nutzt. Der mechanische Teil dieser Kupplung kann beispielsweise aus einer Konus-Reib-Kupplung bestehen, von welcher der eine Konusteil fest mit der Antriebsachse der Lichtmaschine verbunden ist, während der andere beweglich auf dieser Achse gleitet und die Erregerwicklung sowie entsprechende Schleifringe trägt, wobei diese Kupplung bei Bestromung der Erregerwicklung einrückt.

Ferner liegt der vorliegenden Erfindung die Erkenntnis zugrunde, daß ein wesentlicher Teil der Verluste der Lichtmaschine auf Abwärme zurückzuführen sind, die bei hoher Drehzahl des Motors und der Lichtmaschine durch Luftkühlung abgeführt wird. Die Erfindung schlägt deshalb gemäß einer vorteilhaften Weiterbildung die Nutzung dieser von der Lichtmaschine erzeugten Abwärme vor, um das Fahrgastzellen-Heizsystem des Fahrzeugs zu unterstützen. Beispielsweise kann zu diesem Zweck eine Wasserkühlung für die Lichtmaschine vorgesehen sein, die zweckmäßigerweise mit dem übrigen Motorkühlkreislauf verbunden ist, um die Abwärme der Lichtmaschine zur Fahrzeugheizung zu nutzen.

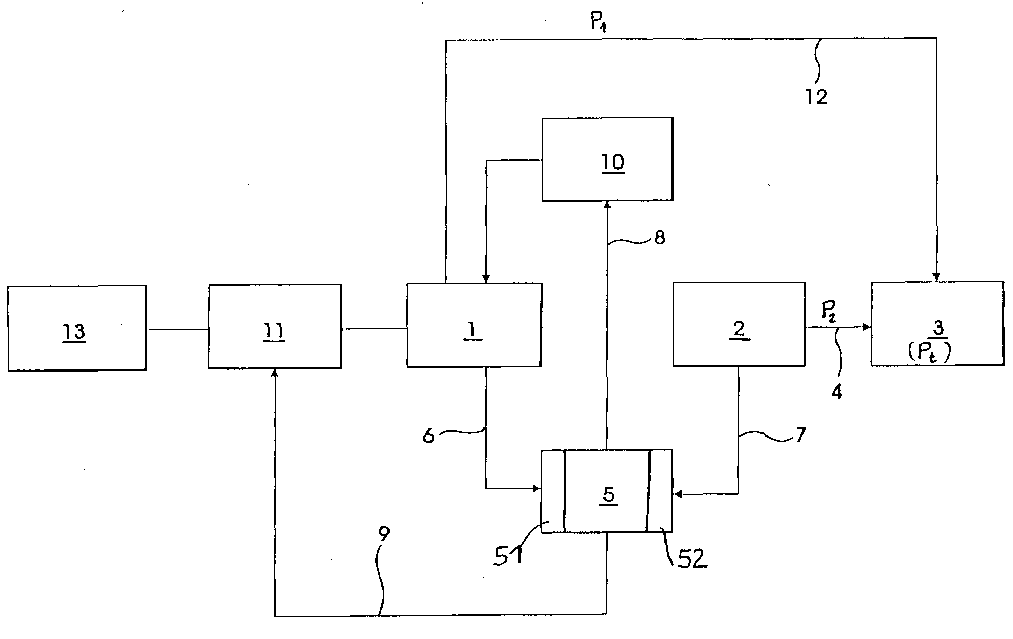

Nachfolgend wird die Erfindung anhand der Zeichnung beispielhaft naher erläutert. Die einzige Figur zeigt schematisch eine Ausführungsform der erfindungsgemäßen Anordnung zur Stromversorgung des Bordnetzes eines Kraftfahrzeugs.

Die in der Figur gezeigte Anordnung umfaßt eine Lichtmaschine 1, die in herkömmlicher Weise im Motorraum angeordnet ist und vom Motor 13 eines Kraftfahrzeugs angetrieben wird, um das Bordnetz 3 des Kraftfahrzeugs mit einer Leistung $P_1$ zu versorgen. Die zwischen Lichtmaschine 1 und Bordnetz 3 üblicherweise angeordnete Batterie ist nicht dargestellt. Nicht dargestellt sind außerdem die an das Bordnetz 3 angeschlossenen Verbraucher bzw. Aggregate des Kraftfahrzeugs. Außerdem umfaßt die erfindungsgemäße Anordnung einen Solargenerator 2, der in an sich bekannter Weise vorzugsweise auf dem Dach des Kraftfahrzeugs angeordnet und dort z.B. zumindest teilweise in ein Schiebedach integriert ist. Der Solargenerator 2 liefert eine Solarleistung $P_2$ über eine Verbindungsleitung 4 in das Bordnetz 3, sodaß die Gesamtleistung $P_t$, die dem Bordnetz 3 zuführbar ist $P_t = P_1 + P_2$ beträgt.

Ferner ist eine Energiebilanz-Erfassungseinrichtvng 5 mit zwei Leistungsmeßvorrichtungen 51 bzw. 52 vorgesehen, die über Leitungen 6 bzw. 7 mit der Lichtmaschine 1 bzw. dem Solargenerator 2 verbunden sind, um deren Leistungen $P_1$ bzw. $P_2$ beispielsweise durch die Messung des Stromflusses zu erfassen. Die Energiebilanz-Erfassungseinrichtung 5 ist an die Ausgangsseiten der Leistungsmeßvorrichtungen 51 bzw. 52 angeschlossen und vergleicht die Leistungen $P_t$ mit der Leistung $P_2$ des Solargenerators 2. In dem Fall, daß die gesamte vom Bordnetz 3 angeforderte Leistung $P_t$ größer oder gleich der vom Solargenerator 2 bereitgestellten Leistung $P_2$ ist, wird ein Signal über die Leitung 9 an die Kupplung 11 gesandt, sodaß diese die Verbindung des Fahrzeuggenerators 1 zum Fahrzeugmotor 13 herstellt.

Ist hingegen die gesamte vom Bordnetz 3 angeforderte Leistung $P_t$ kleiner als die vom Solargenerator 2 bereitgestellte Leistung $P_2$, so wird über die Leitung 9 ein Signal an die Kupplung 11 gesandt, um die Verbindung vom Fahrzeugmotor 13 zum Fahrzeuggenerator 1 zu unterbrechen, wodurch der Leistungsanteil $P_1$ eliminiert wird. Informationen über die Anteile $P_1$ und $P_2$ bezüglich der gesamten angeforderten Leistungen $P_t$ werden von der Energiebilanz-Erfassungseinrichtung 5 an die Einrichtung 10 zum Reduzieren der Lichtmaschinenleistung gesendet. Insoweit haben die Energiebilanz-Erfassungseinrichtung 5 und die Einrichtung 10 zum Reduzieren der Lichtmaschinenleistung die Funktion eines konventionellen Spannungsreglers für den Fahrzeuggenerator 1. Dabei steuert die Einrichtung 10 vorzugsweise die Bestromung der Erregerwicklung der Lichtmaschine 1, sodaß in dem Falle, wenn über die Leitung 12 weniger Energie vom Bordnetz angefordert wird oder falls sich der Anteil der erzeugten Solarenergie $P_2$ erhöht, die Leistung $P_1$ der Lichtmaschine entsprechend reduziert wird.

Der Vergleich der vom Bordnetz angeforderten Leistung $P_t$ mit dem vom Solargenerator 2 bereitgestellten Leistungsanteil $P_2$ kann entweder periodisch über bestimmte Zeitintervalle hinweg erfolgen oder als Vergleich von Momentaufnahmen. Insbesondere im letzteren Falle ist es vorteilhaft, wenn unterschiedliche Schaltschwellen für das Ein- bzw. Ausschalten der Kupplung 11 beim Vergleich der Leistungen $P_t$ und $P_2$ vorgesehen sind, um dadurch unnötig häufige Schaltvorgänge infolge von Hystereseeffekten zu vermeiden.

Die Einrichtung 11 zum Trennen der Lichtmaschine 1 von dem Fahrzeug-Motor 13 basiert bevorzugt auf einer Kupplung, die im Aufbau im einzelnen nicht dargestellt ist. Diese Kupplung basiert vorzugsweise auf einer Magnetkupplung, welche das Feld der Erregerwicklung der Lichtmaschine 1 einbezieht und ein Reibkupplungselement aufweist, dessen einer Teil fest mit der Antriebsachse der Lichtmaschine 1 verbunden ist und dessen anderer Teil auf ihr gleitend angeordnet ist und die Erregerwicklung trägt, wobei die Kupplung zur Bestromung der Erregerwicklung einrückt.

Die Funktion der in der Figur gezeigten Anordnung ist wie folgt. Die Energiebilanz-Erfassungseinrichtung 5 betätigt die Einrichtung 10 zum Reduzieren der Lichtmaschinenleistung entsprechend der Solarstromzufuhr von dem Solargenerator 2 in das Bordnetz 3, wenn eine positive Bilanz zugunsten der Lichtmaschine 1 vorliegt. Die Einrichtung 5 betätigt andererseits die Einrichtung 11 zum Trennen der Lichtmaschine 1 vom Fahrzeug-Motor 13 in dem Fall, daß eine positive Leistungs- oder Energiebilanz zugunsten des Solargenerators 2 vorliegt. Dadurch wird insgesamt erreicht, daß über den Motor 13 des Kraftfahrzeugs mittels der Lichtmaschine 1 nur in dem Maße Energie erzeugt werden muß, wie der Solargenerator 2 nicht in der Lage ist, das Bordnetz 3 mit Strom zu versorgen. Dadurch wird bei entsprechender Sonneneinstrahlung eine deutliche Kraftstoffreduzierung erreicht, die vor allem im Hinblick auf das von der einschlägigen Industrie angestrebte Drei-Liter-Auto einen wesentlichen Vorteil erbringt.

**Bezugszeichenliste**

1     Lichtmaschine

2     Solargenerator

3     Bordnetz

4     Versorgungsleitung

5     Energiebilanz-Erfassungseinrichtung

6     Leitung

7     Leitung

8     Leitung

9     Leitung

10    Einrichtung zum Reduzieren der Lichtmaschinenleistung

11    Einrichtung zum Trennen der Lichtmaschinenleistung vom Bordnetz

12    Versorgungsleitung

13    Fahrzeug-Motor

51    Leistungsmeßvorrichtung (für 1)

52    Leistungsmeßvorrichtung (für 2)

**Patentansprüche**

1.  Anordnung zur Stromversorgung des Bordnetzes (3) eines Kraftfahrzeugs mittels einer durch einen Fahrzeug-Motor (13) angetriebenen Lichtmaschine (1) und mittels eines Solargenerators (2), mit einer Einrichtung (5) zur Erfassung der Leistungs- oder Energiebilanz des Solargenerators (2) relativ zur Lichtmaschine (1) und einer von dieser Erfassungseinrichtung gesteuerten Einrichtung (10) zum Reduzieren der Lichtmaschinen-leistung entsprechend der Solarstromzufuhr, so lange die im Bordnetz verbrauchte Leistung oder Energie größer als die vom Solargenerator angelieferte Leistung bzw. Energie ist, **gekennzeichnet durch** eine gleichfalls von der Erfassungseinrichtung (5) gesteuerte Einrichtung (11) zum Trennen der Lichtmaschine (1) vom Fahrzeug-Motor (13), wenn die im Bordnetz verbrauchte Leistung oder Energie gleich oder kleiner als die vom Solargenerator (2) angelieferte Leistung bzw. Energie ist.

2.  Anordnung nach Anspruch 1, **dadurch gekennzeichnet**, daß die Einrichtung (10) zum Reduzieren der Lichtmaschinenieistung die Bestromung der Erregerwicklung der Lichtmaschine (1) steuert.

3.  Anordnung nach Anspruch 1 oder 2, **dadurch gekennzeichnet**, daß die Einrichtung (11) zum Trennen der Lichtmaschine (1) vom Fahrzeug-Motor (13) eine Kupplung umfaßt.

4.  Anordnung nach Anspruch 3, **dadurch gekennzeichnet**, daß die Kupplung eine Magnetkupplung umfaßt, welche das Feld der Erregerwicklung der Lichtmaschine (1) einbezieht und ein Reibkupplungselement aufweist, dessen einer Teil fest mit der Antriebsachse der Lichtmaschine (1) verbundenen ist und dessen anderer Teil auf ihr gleitend angeordnet ist und die Erregerwicklung trägt, wobei die Kupplung bei Bestromung der Erregerwicklung einrückt.

5.  Anordnung nach einem der Ansprüche 1 bis 4, **dadurch gekennzeichnet**, daß eine Einrichtung vorgesehen ist, die der Lichtmaschine (1) Abwanne entzieht und zum Heizen des Fahrzeugs nutzt.

6.  Anordnung nach Anspruch 5, **dadurch gekennzeichnet**, daß die Wärmeentzugseinrichtung eine Wasserkühlung für die Lichtmaschine (1) umfaßt.

7.  Anordnung nach Anspruch 6, **dadurch gekennzeichnet**, daß die Wasserkühlung an den Motorkühlkreislauf angeschlossen ist.

8.  Anordnung nach Anspruch 1 bis 4, **dadurch gekennzeichnet**, daß die Einrichtung (5) mittels einer Leistungsmeßvorrichtung (51) die Leistung ($P_1$) der Lichtmaschine (1) und mittels einer Leistungsmeßvorrichtung (52) die Leistung ($P_2$) des Solargenerators (2) erfaßt und mit der vom Bordnetz (3) angeforderten Gesamtleistung ($P_t$) vergleicht, wobei wenn $P_2 \geq P_t$ ist, die Einrichtung (11) zum Trennen der Lichtmaschine (1) vom Fahrzeugmotor (13) angesteuert wird.

9.  Anordnung nach Anspruch 9, **dadurch gekennzeichnet**, daß die Einrichtung (5) die Leistungen der Lichtmaschine ($P_1$) und des Solargenerators ($P_2$) an die Einrichtung (10) meldet, die die Leistung ($P_1$) der Lichtmaschine auf den Wert $P_1 = P_t - P_2$ reduziert.